# FASCICULE DE BREVET EUROPEEN

(11) **EP 2 280 911 B1**
(45) Date de publication et mention de la délivrance du brevet: **30.01.2013**
(21) Numéro de dépôt: 09745980.4
(22) Date de dépôt: 22.04.2009
(51) Int. Cl.: C03C 13/00, C03C 3/087

(54) **FILS DE VERRE ET COMPOSITES A MATRICE ORGANIQUE ET/OU INORGANIQUE CONTENANT LESDITS FILS**
GLASSTRÄNGE UND ORGANISCHE UND/ODER ANORGANISCHE MATRIXVERBUNDSTOFFE MIT BESAGTEN STRÄNGEN
GLASS STRANDS, AND ORGANIC AND/OR INORGANIC MATRIX COMPOSITES CONTAINING SAID STRANDS

(30) Priorité: 23.04.2008 FR 0852716
(43) Date de publication de la demande: 09.02.2011
(73) Titulaire: Saint-Gobain Adfors, 73000 Chambéry (FR)
(72) Inventeur: LECOMTE, Emmanuel, F-93600 Aulnay Sous Bois (FR)
(74) Mandataire: Jamet, Vincent
(86) Numéro de dépôt international: PCT/FR2009/050748
(87) Numéro de publication internationale: WO 2009/138661

(56) Documents cités:
- WO-A-02/42233
- WO-A-2006/064164
- GB-A- 1 209 244
- US-A- 3 892 581
- US-A- 3 945 838

## Description

La présente invention concerne des fils ("ou fibres") de verre, notamment des fils textiles, susceptibles d'être obtenus par le procédé qui consiste à étirer mécaniquement des filets de verre fondu s'écoulant d'orifices disposés à la base d'une filière généralement chauffée par effet Joule. Ces fils de verre sont destinés notamment à la réalisation de grilles et de tissus utilisés dans des composites à matrice organique et/ou inorganique.

La présente invention vise plus précisément des fils de verre ayant un module d'Young spécifique élevé, et présentant une composition quaternaire du type SiO₂-Al₂O₃-CaO-MgO particulièrement avantageuse.

Le domaine des fils de verre pouvant être employés pour la fabrication de tels composites est un domaine très particulier de l'industrie du verre. Ces fils sont élaborés à partir de compositions de verre spécifiques, le verre utilisé devant pouvoir être étiré sous la forme de filaments de quelques micromètres de diamètre suivant le procédé indiqué précédemment et devant permettre la formation de fils continus aptes à améliorer les propriétés mécaniques des matrices organiques et/ou inorganiques précitées.

Dans certaines applications notamment aéronautiques, on cherche à obtenir des pièces composites de grande dimension aptes à fonctionner dans des conditions dynamiques et qui par conséquent peuvent résister à des contraintes mécaniques élevées. Ces pièces sont le plus souvent à base de matières organiques et/ou inorganiques et d'une matière fibreuse, par exemple des fils de verre, qui occupe en général plus de 50 % du volume.

L'amélioration des propriétés mécaniques et du rendement de telles pièces composites passe par une amélioration des performances mécaniques des fils de verre, notamment du module d'Young spécifique.

Dans d'autres applications liées à la construction, il est par exemple usuel d'employer des fils de verre, notamment sous forme de grille, pour augmenter la résistance à la fissuration des enduits de façades de bâtiments. Les propriétés recherchées dans ce cas sont une bonne résistance mécanique du fil de verre et une grande stabilité dimensionnelle de la grille.

Les propriétés des fils de verre en particulier sont principalement régies par la composition du verre qui les constitue. Les fils de verre les plus connus utilisés dans les composites à base de matières organiques et/ou inorganiques sont constitués de verre E ou R.

Dans les composites, les fils en verre E sont couramment employés soit tels quels, avantageusement après avoir subi une opération de torsion (fils textiles) soit sous forme d'assemblages organisés tels que des grilles ou des tissus. Les conditions dans lesquelles le verre E peut être fibré sont très avantageuses : la température de travail correspondant à la température à laquelle le verre a une viscosité proche de 1000 poises est relativement basse, de l'ordre de 1200°C, la température de liquidus est inférieure d'environ 120°C à la température de travail et sa vitesse de dévitrification est faible.

La composition du verre E définie dans la norme ASTM D 578-98 pour les applications dans les domaines de l'électronique et de l'aéronautique est la suivante (en pourcentage pondéral) : 52 à 56 % de SiO₂; 12 à 16 % d'Al₂O₃; 16 à 25% de CaO; 5 à 10 % de B₂O3; 0 à 5 % de MgO; 0 à 2 % de Na₂O + K₂O; 0 à 0,8 % de TiO₂; 0,05 à 0,4 % de Fe₂O₃; 0 à 1 % de F₂.

Néanmoins, le verre E en masse présente un module d'Young spécifique relativement faible, de l'ordre de 33 MPa/kg/m³.

Dans la norme ASTM D 578-98, il est décrit d'autres fils de verre E, éventuellement sans bore. Ces fils ont la composition suivante (en pourcentage pondéral) : 52 à 62 % de SiO₂; 12 à 16 % d'Al₂O₃; 16 à 25 % de CaO; 0 à 10 % de B₂O₃; 0 à 5 % de MgO; 0 à 2 % de Na₂O + K₂O; 0 à 1,5 % de TiO₂; 0,05 à 0,8 % de Fe₂O₃; 0 à 1 % de F₂.

Les conditions de fibrage du verre E sans bore sont moins bonnes que celles du verre E avec bore mais elles restent cependant acceptables économiquement. Le module d'Young spécifique demeure à un niveau de performance équivalent à celui du verre E.

Il est encore connu de US 4 199 364 un verre économique, sans bore et sans fluor, qui présente des propriétés mécaniques, notamment en termes de résistance en traction, comparables à celles du verre E.

Le verre R en masse est connu pour ses bonnes propriétés mécaniques notamment au regard du module d'Young spécifique qui est de l'ordre de 33,5 MPa/kg/m³. En revanche, les conditions de fusion et de fibrage sont plus contraignantes que pour les verres du type E susmentionnés, et donc son coût final est plus élevé.

La composition du verre R est donnée dans FR-A-1 435 073. Elle est la suivante (en pourcentage pondéral) : 50 à 65 % de Si0₂; 20 à 30 % d'Al₂O₃; 2 à 10 % de CaO; 5 à 20 % de MgO; 15 à 25 % de CaO + MgO; SiO₂/Al₂O₃ = 2 à 2,8; MgO/SiO₂ < 0,3.

D'autres tentatives pour augmenter la résistance mécanique des fils de verre ont été faites mais généralement au détriment de leur aptitude au fibrage, la mise en oeuvre devenant alors plus difficile ou imposant d'avoir à modifier les installations de fibrage existantes.

Les fils de verre décrits dans FR 1 357 393 entrent dans cette catégorie : ils présentent une très haute résistance aux températures élevées (815°C ou davantage) et des propriétés mécaniques particulièrement avantageuses, notamment une résistance à la traction dépassant 35 000 kg/cm². Les conditions d'obtention de tels fils sont cependant très contraignantes imposant notamment une température au niveau de la filière d'au moins 1475°C et qui peut aller jusqu'à 1814°C. Ces conditions n'autorisent pas le fibrage direct à partir du verre fondu élaboré dans un four, seulement un fibrage indirect à partir de verre sous forme de billes.

Dans FR-A-2 856 055, la demanderesse propose des fils de verre qui allient les propriétés mécaniques du verre R, en particulier au niveau du module d'Young spécifique, et des propriétés de fusion et de fibrage améliorées se rapprochant de celles du verre E. Le verre constituant ces fils comprend les constituants suivants dans les limites définies ci-après en pourcentages pondéraux : 50 à 65 % de SiO₂ ; 12 à 20 % d'Al₂O₃ ; 13 à 17 % de CaO ; 6 à 12 % de MgO ; 0 à 3 % de B₂O₃ ; 0 à 3 % de TiO₂; moins de 2 % de Na₂O + K₂O; 0 à 1 % de F₂ et moins de 1 % de Fe₂O₃.

Dans FR-A-2 879 591, la composition des fils de verre précité est améliorée par l'ajout de 0,1 à 0,8 % de Li₂O et le choix du rapport CaO/MgO qui est inférieur ou égal à 2 et de préférence supérieur ou égal à 1,3.

US 3 945 838 décrit des fibres de verre sans bore ni fluor avec une température au liquidus d'environ 1200°C.

La présente invention a pour but d'obtenir des filaments constitués d'un verre présentant un module d'Young spécifique élevé pouvant être fabriqués dans les conditions usuelles d'un fibrage direct qui imposent notamment au verre d'avoir une température au liquidus au plus égale à 1250°C et de préférence au plus égale à 1230°C.

Ce but est atteint grâce aux fils de verre dont la composition comprend les constituants suivants dans les limites définies ci-après exprimées en pourcentages pondéraux :

| | |
|---|---|
| SiO₂ | 50 - 65 % |
| Al₂O₃ | 12 - 23 % |
| SiO2 + Al₂O₃ | > 79 % |
| CaO | 1 - 10 %, |
| MgO | 6-12 % |
| Li₂O | 1 - 3 %, de préférence 1 - 2 % |
| BaO+SrO | 0-3% |
| B₂O₃ | 0 - 3 % |
| TiO₂ | 0 - 3 % |
| Na₂O+K₂O | <2% |
| F₂ | 0 - 1 % |
| Fe₂O₃ | < 1 %. |

La silice SiO₂ est l'un des oxydes qui forme le réseau des verres selon l'invention et joue un rôle essentiel pour leur stabilité. Dans le cadre de l'invention, lorsque le taux de silice est inférieur à 50 %, la viscosité du verre devient trop faible et les risques de dévitrification lors du fibrage sont augmentés. Au-delà de 65 %, le verre devient très visqueux et difficile à fondre. De préférence, le taux de silice est compris entre 58 et 63 %.

L'alumine Al₂O3 constitue également un formateur du réseau des verres selon l'invention et joue un rôle essentiel à l'égard du module, combiné avec la silice. Dans le cadre des limites définies selon l'invention, la diminution du pourcentage de cet oxyde au-dessous de 12 % entraîne une diminution du module d'Young spécifique et contribue à augmenter les vitesses maximales de dévitrification, alors qu'une trop forte augmentation du pourcentage de cet oxyde au-delà de 23 % entraîne des risques de dévitrification et une augmentation de la viscosité. De préférence, la teneur en alumine des compositions sélectionnées est comprise entre 18 et 23 %. De manière avantageuse, la somme des teneurs en silice et en alumine est supérieure à 80 %, et mieux encore supérieure à 81 % ce qui permet d'obtenir des valeurs intéressantes du module d'Young spécifique.

La chaux CaO permet d'ajuster la viscosité et de contrôler la dévitrification des verres. La teneur en CaO dans les fils selon l'invention est une caractéristique essentielle. Elle est comprise entre 1 et 10 %, de préférence est supérieure ou égale à 3 %, avantageusement supérieure ou égale à 5 % et mieux encore supérieure ou égale à 6 %. De manière particulièrement avantageuse, la teneur en CaO est inférieure ou égale à 9 %, et mieux encore inférieure ou égale à 8%.

La magnésie MgO, tout comme CaO, joue le rôle de fluidifiant et a aussi un effet bénéfique sur le module d'Young spécifique. La teneur en MgO est comprise entre 6 et 12 %, de préférence entre 9 et 12 %.

Le rapport pondéral CaO/MgO a une influence sur le module d'Young spécifique et sur la température au liquidus du verre. Pour une teneur en alumine donnée, une diminution du rapport CaO/MgO a pour effet d'augmenter le module d'Young spécifique. De préférence, le rapport CaO/MgO varie de 0,5 à 1,3 et avantageusement de 0,7 à 1,1.

D'autres oxydes de métal alcalino-terreux, par exemple BaO et SrO, peuvent être présents dans la composition de verre. La teneur totale en ces oxydes est maintenue inférieure à 3 %, de préférence inférieure à 1 % afin de ne pas augmenter la densité du verre, ce qui a pour effet d'abaisser le module d'Young spécifique. En règle générale, la composition est substantiellement exempte de BaO et de SrO.

L'oxyde de lithium Li₂O est indispensable à l'obtention d'un module d'Young spécifique élevé. Il assure en outre le rôle de fluidifiant, tout comme MgO. Au-delà de 3 %, Li₂O entraîne une diminution importante de la température de travail, et donc de la plage de formage (écart entre la température de travail et la température de liquidus), qui ne permet plus de fibrer le verre dans des conditions satisfaisantes. En deçà de 1 %, la diminution de la température de travail est insuffisante.

Li₂O est essentiellement apporté par deux matières premières, l'une synthétique, le carbonate de lithium, et l'autre naturelle, le spodumène qui contient de l'ordre de 7 à 8 % de Li₂O.

La composition du verre qui constitue les filaments selon l'invention repose sur le choix de la teneur en Al₂O₃, du rapport CaO/MgO et de la teneur en Li₂O. La combinaison de ces trois paramètres permet d'obtenir des valeurs du module d'Young spécifique tout à fait satisfaisantes (supérieures ou égales à 36,5 MPa/kg/m³) tout en ayant de bonnes conditions de fibrage.

L'oxyde de bore B₂O₃ joue le rôle de fluidifiant. Sa teneur dans la composition de verre selon l'invention est limitée à 3 %, de préférence 2 %, pour éviter les problèmes de volatilisation et d'émission de polluants.

L'oxyde de titane joue un rôle de fluidifiant et contribue à augmenter le module d'Young spécifique. Il peut être présent à titre d'impureté (son taux dans la composition est alors de 0 à 1 %) ou être ajouté volontairement. Dans ce dernier cas, il est nécessaire d'utiliser des matières premières inhabituelles plus coûteuses. De préférence, la teneur en TiO₂ est inférieure à 2 %, et avantageusement inférieure à 1 % de manière à éviter que le verre présente une coloration jaune indésirable.

Na₂O et K₂O peuvent être introduits dans la composition selon l'invention pour contribuer à limiter la dévitrification et réduire éventuellement la viscosité du verre. La teneur en Na₂O et K₂O doit cependant rester inférieure à 2 % pour éviter une diminution pénalisante de la résistance hydrolytique du verre. De préférence, la composition comprend moins de 0,8 % de ces deux oxydes.

Du fluor F₂ peut être présent dans la composition pour aider à la fusion du verre et au fibrage. Néanmoins, sa teneur est limitée à 1 % car au-delà peuvent survenir des risques d'émissions polluantes et de corrosion des réfractaires du four.

Les oxydes de fer (exprimés sous forme de Fe₂O₃) sont généralement présents à titre d'impuretés dans la composition selon l'invention. Le taux de Fe₂O₃ doit rester inférieur à 1 %, de préférence inférieur ou égal à 0,5 % pour ne pas nuire de façon rédhibitoire à la couleur des fils et à la conduite de l'installation de fibrage, en particulier aux transferts de chaleur dans le four.

De préférence, les fils de verre ont une composition comprenant les constituants suivants dans les limites définies ci-après exprimées en pourcentages pondéraux :

| | |
|---|---|
| SiO₂ | 58 - 63 % |
| Al₂O₃ | 18 - 23 % |
| SiO₂ + Al₂O₃ | > 79 % |
| CaO | 5 - 9 %, de preference 6 - 8 % |
| MgO | 9-12% |
| Li₂O | 1 - 2 % |
| BaO + SrO | 0 - 1 % |
| B₂O₃ | 0 - 2 % |
| TiO₂ | 0 - 1 % |
| Na₂O + K₂O | < 0,8 % |
| F₂ | 0 - 1 % |
| Fe₂O₃ | < 0,5 % |

De manière particulièrement avantageuse, la composition présente un rapport pondéral Al₂O₃/(Al₂O₃+CaO+MgO) qui varie de 0,4 à 0,7, de préférence de 0,5 à 0,6, ce qui permet d'obtenir des verres ayant une température de liquidus inférieure ou égale à 1250°C, de préférence inférieure ou égale à 1230°C.

En règle générale, les fils de verre selon l'invention sont exempts d'oxyde de bore B₂O₃ et de fluor F₂.

Les fils de verre selon l'invention sont obtenus à partir des verres de composition précédemment décrite selon le procédé suivant : on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement. Il peut s'agir d'un support en rotation lorsque les fils sont collectés sous la forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus ou coupés, tissus, tricots, tresses, rubans ou mats, ces fils étant composés de filaments de diamètre pouvant aller de 5 à 30 micromètres environ, de préférence inférieur ou égal à 13 µm. De préférence, le fil est un fil textile ayant subi une opération de torsion.

Le verre fondu alimentant les filières est obtenu à partir de matières premières pures ou le plus souvent naturelles (c'est-à-dire pouvant contenir des impuretés à l'état de traces), ces matières étant mélangées dans des proportions appropriées, puis étant fondues. La température du verre fondu est réglée de façon traditionnelle de manière à permettre le fibrage et éviter les problèmes de dévitrification. Avant leur rassemblement sous forme de fils, les filaments sont généralement revêtus d'une composition d'ensimage visant à les protéger de l'abrasion, à aider leur assemblage sous la forme notamment de grilles et de tissus, et à favoriser leur association ultérieure avec les matières organiques et/ou inorganiques des composites.

Les composites obtenus à partir des fils selon l'invention comprennent au moins une matière organique et/ou au moins une matière inorganique et des fils de verre, une partie au moins des fils étant des fils selon l'invention.

Les fils de verre conformes à l'invention peuvent être utilisés dans tout type d'applications et leur emploi ne se limite pas aux domaines aéronautique et de la construction mentionnés précédemment. Notamment, lesdits fils peuvent être utilisés pour fabriquer des produits obtenus par laminage.

Les exemples qui suivent permettent d'illustrer l'invention sans toutefois la limiter.

Des fils de verre composés de filaments de verre de 13 µm de diamètre sont obtenus par étirage de verre fondu ayant la composition figurant dans le tableau 1, exprimée en pourcentages pondéraux.

On note T(log η=3) la température à laquelle la viscosité du verre est égale à 10³ poises (déciPascal seconde).

On note T_{liquidus} la température de liquidus du verre, correspondant à la température à laquelle la phase la plus réfractaire, qui peut dévitrifier dans le verre, a une vitesse de croissance nulle et correspond ainsi à la température de fusion de cette phase dévitrifiée.

On reporte la valeur du module d'Young spécifique du verre en masse calculée à partir du module d'Young mesuré selon la norme ASTM C 1259-01 et de la densité mesurée par la méthode d'Archimède. On donne à titre d'exemples comparatifs les mesures pour des verres E, R et S (conforme à l'exemple 1 de FR 1 357 393) et un verre selon FR 2 879 591 (exemple comparatif 1 ).

Il apparaît que les exemples selon l'invention présentent un excellent compromis entre les propriétés de fusion et de fibrage, et les propriétés mécaniques. Ces propriétés de fibrage sont particulièrement avantageuses, notamment avec une température de liquidus de l'ordre de 1210 à 1230°C, nettement plus faible que celle des verres R et S. La plage de fibrage des exemples 1 à 4 est positive, avec un écart entre T(log η=3) et T_{liquidus} qui est supérieur ou égal à 60°C (exemple 4), 70°C (exemple 1) ou 80°C (exemple 2), ou de l'ordre de 90°C (exemple 3).

Le module d'Young spécifique du verre obtenu à partir des compositions selon les exemples 1 et 2 est nettement plus élevé que celui du verre E et aussi amélioré par rapport au verre R et au verre de l'exemple comparatif 1.

Avec les verres selon l'invention, on atteint ainsi de manière remarquable des propriétés mécaniques sensiblement améliorées par rapport à celles du verre R, tout en abaissant substantiellement la température de fibrage pour se rapproche de la valeur obtenue pour le verre E. Les verres des exemples 1 à 4 constituent une excellente alternative au verre S du fait de la réduction très importante de la température au liquidus (220°C, 230 et 210°C, respectivement) et de la température de travail (179, 165, 172 et 176 °C, respectivement) tout en conservant un module d'Young spécifique relativement élevé.

Les fils de verre selon l'invention présentent en outre une résistance à l'eau et aux alcalins améliorée par rapport au verre E.

Les fils de verre selon l'invention sont plus économiques que les fils de verre R qu'ils peuvent remplacer avantageusement dans toutes applications, notamment utilisant des fils textiles.

**TABLEAU 1**

| | Ex. 1 | Ex. 2 | Ex. 3 | Ex. 4 | Verre E (comparatif) | Verre R (comparatif) | Verre S (comparatif) | Ex. comparatif 1 |
|---|---|---|---|---|---|---|---|---|
| SiO₂ (%) | 60,50 | 60,90 | 60,60 | 60,20 | 54,40 | 60,00 | 65,00 | 60,50 |
| Al₂O₃ (%) | 19,90 | 18,30 | 20,50 | 21,50 | 14,50 | 25,00 | 25,00 | 16,00 |
| CaO (%) | 7,70 | 8,30 | 6,80 | 5,80 | 21,20 | 9,00 | - | 13,50 |
| MgO (%) | 9,50 | 10,00 | 9,30 | 9,30 | 0,30 | 6,00 | 10,00 | 8,35 |
| Na₂O (%) | 0,20 | - | 0,20 | 0,20 | 0,60 | - | - | - |
| K₂O (%) | 0,50 | - | 0,50 | 0,50 | - | - | - | - |
| Li₂O (%) | 1,40 | 1,30 | 1,65 | 2,00 | 7,30 | - | - | 0,75 |
| TiO₂ (%) | 0,13 | - | 0,17 | 0,10 | - | - | - | - |
| Fe₂O₃(%) | | - | 0,20 | 0,20 | - | - | - | - |
| CaO/MgO | 0,81 | 0,83 | 0,73 | 0,62 | 70,66 | 1,5 | 0 | 1,61 |
| T(log η=3) (°C) | 1293 | 1307 | 1300 | 1296 | 1203 | 1410 | 1472 | 1279 |
| T_{liquidus} (°C) | 1220 | 1220 | 1210 | 1230 | 1080 | 1330 | 1440 | 1200 |
| T(log η=3) - T_{liquidus} (°C) | 73 | 87 | 90 | 66 | 123 | 80 | 32 | 79 |
| Module d'Young spécifique (MPa/kg/m³) | 36,7 | 36,5 | 36,7 | 36,9 | 33,3 | 35,5 | 37,4 | 35,6 |
| DGG (mg) | n. d. | 6,9 | - | - | 8,0 | 3,3 | n. d. | n. d. |
| Alcalinité (mg) | n. d. | 1,2 | - | - | 1,4 | 0,4 | n. d. | n. d. |

| | | | | | | | | |
|---|---|---|---|---|---|---|---|---|
| n. d. : non déterminé | | | | | | | | |

## Revendications

1. Fil de verre destiné notamment à la réalisation de composites à matrice organique et/ou inorganique dont la composition comprend les constituants suivants dans les limites définies ci-après exprimées en pourcentages pondéraux :
| | |
|---|---|
| SiO₂ | 50 - 65 % |
| Al₂O₃ | 12 - 23 % |
| SiO₂ + Al₂O₃ | > 79 % |
| CaO | 1-10% |
| MgO | 6 - 12 % |
| Li₂O | 1 - 3 %, de préférence 1 - 2 % |
| BaO+SrO | 0 - 3 % |
| B₂O₃ | 0 - 3 % |
| TiO₂ | 0 - 3 % |
| Na₂O + K₂O | < 2 % |
| F₂ | 0 - 1 % |
| Fe₂O₃ | < 1 %. |

2. Fil de verre selon la revendication 1, **caractérisé en ce que** la composition comprend une teneur en SiO₂ + Al₂O₃ est supérieure à 80 %, et de préférence supérieure à 81 %.

3. Fil de verre selon la revendication 1 ou 2, **caractérisé en ce que** la composition présente une teneur en CaO supérieure ou égale à 3 %, de préférence supérieure ou égale à 5 % et avantageusement supérieure ou égale à 6%.

4. Fil de verre selon la revendication 3, **caractérisé en ce que** la teneur en CaO est inférieure ou égale à 9 %, de préférence inférieure ou égale à 8 %.

5. Fil de verre selon l'une des revendications 1 à 4, **caractérisé en ce que** la composition présente un rapport pondéral CaO/MgO qui varie de 0,5 à 1,3 et de préférence de 0,7 à 1,1.

6. Fil de verre selon l'une des revendications 1 à 5, **caractérisé en ce que** la composition présente un rapport pondéral Al₂O₃/(Al₂O₃+CaO+MgO) qui varie de 0,4 à 0,7, de préférence de 0,5 à 0,6.

7. Fil de verre selon l'une des revendications 1 à 6, **caractérisé en ce que** la composition comprend les constituants suivants :
| | |
|---|---|
| SiO₂ | 58-63% |
| Al₂O₃ | 18 - 23 % |
| SiO₂ + Al₂O₃ | > 79 % |
| CaO | 5 - 9 %, de préférence 6 à 8 % |
| MgO | 9-12% |
| Li₂O | 1 - 2 % |
| BaO+SrO | 0 - 1 % |
| B₂O₃ | 0 - 2 % |
| TiO₂ | 0 - 1 % |
| Na₂O + K₂O | < 0,8 % |
| F₂ | 0 - 1 % |
| Fe₂O₃ | < 0,5 % |

8. Fil de verre selon l'une des revendications 1 à 7, **caractérisé en ce qu'**il est exempt de B₂O₃ et de F₂.

9. Assemblage de fils de verre, notamment sous forme de grille ou de tissu, **caractérisé en ce qu'**il comprend des fils de verre tels que définis par l'une des revendications 1 à 8.

10. Composite de fils de verre et de matière(s) organique(s) et/ou inorganique(s), **caractérisé en ce qu'**il comprend des fils de verre tels que définis par l'une des revendications 1 à 8.

11. Composition de verre adaptée à la réalisation de fils de verre selon l'une des revendications 1 à 8 qui comprend les constituants suivants dans les limites définies ci-après exprimées en pourcentages pondéraux :
| | |
|---|---|
| SiO₂ | 50 - 65 % |
| Al₂O₃ | 12 - 23 % |
| SiO₂ + Al₂O₃ | > 79 % |
| CaO | 1-10% |
| MgO | 6-12 % |
| Li₂O | 1 - 3 %, de préférence 1 - 2 |
| BaO+SrO | 0 - 3 % |
| B₂O₃ | 0 - 3 % |
| TiO₂ | 0 - 3 % |
| Na₂O + K₂O | < 2 % |
| F₂ | 0 - 1 % |
| Fe₂O₃ | < 1 %. |

12. Composition selon la revendication 11, **caractérisée en ce qu'**elle présente une plage de formage (T(log η)=3) - T_{liquidus}) supérieure ou égale à 60°C, de préférence supérieure ou égale à 70°C, avantageusement supérieure ou égale à 80°C et mieux encore de l'ordre de 90°C.

## Claims

1. A glass strand intended especially for the production of composites having an organic and/or inorganic matrix, whose composition comprises the following constituents in the limits defined below, expressed as percentages by weight:
| | |
|---|---|
| SiO₂ | 50-65% |
| Al₂O₃ | 12-23% |
| SiO₂+Al₂O₃ | > 79% |
| CaO | 1-10% |
| MgO | 6-12% |
| Li₂O | 1-3%, preferably 1-2% |
| BaO+SrO | 0-3% |
| B₂O₃ | 0-3% |
| TiO₂ | 0-3% |
| Na₂O+K₂O | < 2% |
| F₂ | 0-1% |
| Fe₂O₃ | < 1%. |

2. The glass strand as claimed in claim 1, **characterized in that** the composition has an SiO₂+Al₂O₃ content of greater than 80%, preferably of greater than 81%.

3. The glass strand as claimed in claim 1 or 2, **characterized in that** the composition has a CaO content equal to or greater than 3%, preferably equal to or greater than 5% and advantageously equal to or greater than 6%.

4. The glass strand as claimed in claim 3, **characterized in that** the CaO content is equal to or less than 9%, preferably equal to or less than 8%.

5. The glass strand as claimed in one of claims 1 to 4, **characterized in that** the composition has a CaO/MgO weight ratio that varies from 0.5 to 1.3 and preferably from 0.7 to 1.1.

6. The glass strand as claimed in one of claims 1 to 5, **characterized in that** the composition has an Al₂O₃/(Al₂O₃+CaO+MgO) weight ratio that ranges from 0.4 to 0.7, preferably from 0.5 to 0.6.

7. The glass strand as claimed in one of claims 1 to 6, **characterized in that** the composition comprises the following constituents:
| | | | |
|---|---|---|---|
| | SiO₂ | | 58-63% |
| | Al₂O₃ | | 12-23%18-23% |
| | SiO₂+Al₂O₃ | | > 79% |
| | CaO | | 5-9%, preferably 6-8% |
| | MgO | | 9-12% |
| | Li₂O | | 1-2% |
| | BaO+SrO | | 0-1% |
| | B₂O₃ | | 0-2% |
| | TiO₂ | | 1-1% |
| | Na₂O+K₂O | | < 0.8% |
| | F₂ | | 0-1% |
| | Fe₂O₃ | | < 0.5% |

8. The glass strand as claimed in one of claims 1 to 7, **characterized in that** it contains no B₂O₃ or F₂.

9. An assembly of glass strands, especially in the form of a mesh or woven fabric, **characterized in that** it comprises glass strands as defined in one of claims 1 to 8.

10. A composite consisting of glass strands and organic and/or inorganic material(s), **characterized in that** it comprises glass strands as defined by one of claims 1 to 8.

11. A glass composition suitable for producing glass reinforcement strands as claimed in one of claims 1 to 8, comprising the following constituents in the limits defined below, expressed as percentages by weight:
| | |
|---|---|
| SiO₂ | 50-65% |
| Al₂O₃ | 12-23% |
| SiO₂+Al₂O₃ | > 79% |
| CaO | 1-10% |
| MgO | 6-12% |
| Li₂O | 1-3%, preferably 1-2% |
| BaO+SrO | 0-3% |
| B₂O₃ | 0-3% |
| TiO₂ | 0-3% |
| Na₂O+K₂O | < 2% |
| F₂ | 0-1% |
| Fe₂O₃ | < 1%. |

12. The composition as claimed in claim 11, **characterized in that** it has a forming range (T(logη=3) T_{liquidus}) equal to or greater than 60°C, preferably equal to or greater than 70°C, advantageously equal to or greater than 80°C and better still around 90°C.

## Patentansprüche

1. Glasfaden, der insbesondere für die Herstellung von Verbunden mit organischer und/oder anorganischer Matrix bestimmt ist, dessen Zusammensetzung die folgenden Bestandteile innerhalb der nachstehend definierten, in Gewichtsprozenten ausgedrückten Grenzen umfasst:
| | |
|---|---|
| SiO₂ | 50 - 65 % |
| Al₂O₃ | 12 - 23 % |
| SiO₂ + Al₂O₃ | > 79 % |
| CaO | 1 - 10 % |
| MgO | 6 - 12 % |
| Li₂O | 1 - 3 %, vorzugsweise 1 - 2 % |
| BaO+SrO | 0-3 % |
| B₂O₃ | 0 - 3 % |
| TiO₂ | 0 - 3 % |
| Na₂O + K₂O | < 2 % |
| F₂ | 0-1% |
| Fe₂O₃ | < 1 %. |

2. Glasfaden nach Anspruch 1, **dadurch gekennzeichnet, dass** die Zusammensetzung einen Gehalt an SiO₂ + Al₂O₃ von über 80 % und vorzugsweise von über 81 % aufweist.

3. Glasfaden nach Anspruch 1 oder 2, **dadurch gekennzeichnet, dass** die Zusammensetzung einen Cao-Gehalt von über oder gleich 3 %, vorzugsweise von über oder gleich 5 % und vorteilhafterweise von über oder gleich 6 % aufweist.

4. Glasfaden nach Anspruch 3, **dadurch gekennzeichnet, dass** der CaO-Gehalt weniger als oder gleich 9 %, vorzugsweise weniger als oder gleich 8 % beträgt.

5. Glasfaden nach einem der Ansprüche 1 bis 4, **dadurch gekennzeichnet, dass** die Zusammensetzung ein Gewichtsverhältnis CaO/MgO aufweist, das von 0,5 bis 1,3 und vorzugsweise von 0,7 bis 1,1 variiert.

6. Glasfaden nach einem der Ansprüche 1 bis 5, **dadurch gekennzeichnet, dass** die Zusammensetzung ein Gewichtsverhältnis Al₂O₃/( Al₂O₃+CaO+MgO) aufweist, das von 0,4 bis 0,7, vorzugsweise von 0,5 bis 0,6 variiert.

7. Glasfaden nach einem der Ansprüche 1 bis 6, **dadurch gekennzeichnet, dass** die Zusammensetzung die folgenden Bestandteile umfasst:
| | |
|---|---|
| SiO₂ | 58 - 63 % |
| Al₂O₃ | 18 - 23 % |
| SiO₂ + Al₂O₃ | > 79 % |
| CaO | 5 - 9 %, vorzugsweise 6 bis 8 % |
| MgO | 9-12% |
| Li₂O | 1 - 2 % |
| BaO + SrO | 0 - 1 % |
| B₂O₃ | 0-2% |
| TiO₂ | 0-1% |
| Na₂O + K₂O | < 0,8 % |
| F₂ | 0-1% |
| Fe₂O₃ | < 0,5 %. |

8. Glasfaden nach einem der Ansprüche 1 bis 7, **dadurch gekennzeichnet, dass** er B₂O₃- und F₂-frei ist.

9. Anordnung von Glasfäden, insbesondere in Form eines Gitters oder eines Gewebes, **dadurch gekennzeichnet, dass** sie Glasfäden umfasst, wie sie durch einen der Ansprüche 1 bis 8 definiert sind.

10. Verbund aus Glasfäden und organischem (organischen) und/oder anorganischem (anorganischen) Material(ien), **dadurch gekennzeichnet, dass** er Glasfäden umfasst, wie sie durch einen der Ansprüche 1 bis 8 definiert sind.

11. Glaszusammensetzung, welche für die Herstellung von Glasfäden nach einem der Ansprüche 1 bis 8 geeignet ist, die die folgenden Bestandteile innerhalb der nachstehend definierten, in Gewichtsprozenten ausgedrückten Grenzen umfasst:
| | |
|---|---|
| SiO₂ | 50-65% |
| Al₂O₃ | 12-23% |
| SiO₂+Al₂O₃ | > 79 % |
| CaO | 1-10% |
| MgO | 6 - 12 % |
| Li₂O | 1 - 3 %, vorzugsweise 1 - 2 |
| BaO+SrO | 0-3% |
| B₂O₃ | 0 - 3 % |
| TiO₂ | 0 - 3 % |
| Na₂O + K₂O | < 2 % |
| F₂ | 0 - 1 % |
| Fe₂O₃ | <1%. |

12. Zusammensetzung nach Anspruch 11, **dadurch gekennzeichnet, dass** sie einen Formungsbereich (T(log η = 3) - T_{liquidus}) von über oder gleich 60 °C, vorzugsweise von über oder gleich 70 °C, vorteilhafterweise von über oder gleich 80 °C und besser noch in der Größenordnung von 90 °C aufweist.
